# EUROPÄISCHE PATENTSCHRIFT

(11) **EP 2 129 906 B1**
(45) Veröffentlichungstag und Bekanntmachung des Hinweises auf die Patenterteilung: **13.04.2016**
(21) Anmeldenummer: 08734394.3
(22) Anmeldetag: 15.03.2008
(51) Int. Cl.: B63B 35/44, E02B 17/00, F03D 1/00

(54) **VERFAHREN ZUM AUSTAUSCH EINER GONDEL INKL. ROTOR EINER OFFSHORE-WINDENERGIEANLAGE UND WASSERFAHRZEUG ZUR DURCHFÜHRUNG DES VERFAHRENS**
METHOD FOR REPLACING A NACELLE INCLUDING THE ROTOR OF AN OFFSHORE WIND TURBINE AND WATERCRAFT FOR CARRYING OUT SAID METHOD
PROCÉDÉ POUR REMPLACER UNE NACELLE COMPORTANT LE ROTOR D'UNE ÉOLIENNE OFFSHORE ET NAVIRE SERVANT À LA MISE EN OEUVRE DE CE PROCÉDÉ

(30) Priorität: 17.03.2007 DE 102007012848
(43) Veröffentlichungstag der Anmeldung: 09.12.2009
(73) Patentinhaber: Aerodyn Engineering GmbH, 24768 Rendsburg (DE)
(72) Erfinder: SIEGFRIEDSEN, Sönke, 25878 Drage (DE)
(74) Vertreter: Lobemeier, Martin Landolf
(86) Internationale Anmeldenummer: PCT/DE2008/000455
(87) Internationale Veröffentlichungsnummer: WO 2008/113334

(56) Entgegenhaltungen:
- WO-A-01/83290
- WO-A-02/48547
- WO-A-99/43956
- WO-A-03/093584
- WO-A-03/100178
- FR-A- 2 849 877

## Beschreibung

Die Erfindung betrifft ein Verfahren zum Austausch einer aus dem Maschinenhaus und dem Rotor gebildeten Einheit einer Offshore-Windenergieanlage. Die Erfindung betrifft weiterhin ein Wasserfahrzeug zur Durchführung dieses Verfahrens.

Die Nutzung von Windenergie ist bereits seit dem Altertum zum Antrieb von Maschinen bekannt und gewinnt heutzutage insbesondere bei der Gewinnung elektrischer Energie zunehmend an Bedeutung. Die sich aus der für Windmühlen entwickelten Technologie herausgebildeten Windenergieanlagen sind nahezu an jedem Standort zur Gewinnung von Energie einsetzbar, wobei auch vermehrt Windenergieparks auf dem offenen Meer bzw. der Küste vorgelagert, also "offshore", installiert werden.

Offshore-Windenergieanlagen werden von der Bevölkerung besser akzeptiert. Sie erlauben schnell wachsenden, am Meer gelegenen Metropolen eine umwelt- und ressourcenschonende Möglichkeit, den Energiebedarf der Bevölkerung und der Industrie sicher zu gewährleisten.

Aufgrund des korrosiven Verhaltens von Meerwasser sind an die bei Windkraftanlagen verwendeten Materialien besonders hohe Anforderungen gestellt. Es sind Konstruktionen zu verwenden, die zugleich kurzzeitig auftretenden energiereichen Böen und hohem Wellengang standhalten können.

Ferner stellt die Errichtung, Wartung und Reparatur einer Offshore-Windenergieanlage hohe Anforderungen an die konstruktive Ausführung der Anlage sowie der dafür erforderlichen Transport- und Montageschiffe. Diese Arbeiten auf offener See können unter Umständen bei widrigen Witterungsverhältnissen gar nicht oder nur eingeschränkt durchgeführt werden. Daher ist es gerade auch für erforderliche größere Reparaturen notwendig, dass diese sehr schnell durchgeführt werden können.

Daher wurde bereits vorgeschlagen, für den Offshore-Einsatz entwickelte Windenergieanlagen zunächst in Küstennähe zu funktionsfähigen oder im Wesentlichen funktionsfähigen Windenergieanlagen zu montieren und anschließend an den Ort zu verbringen, an dem die Windenergieanlage dauerhaft eingesetzt werden soll. Die WO 01/34977 A1 beschreibt beispielsweise ein derartiges Verfahren und Installations- bzw. Transportsystem zum Transport einer vollständig montierten Windenergieanlage in einen Offshore-Bereich bzw. zum Zweck der Wartung wieder aus diesem heraus in einen küstennahen Bereich.

Der Nachteil des in der WO 01/34977 A1 beschriebenen Transportverfahrens ist jedoch, dass die dort gezeigte Windenergieanlage durch die bereits durchgeführte Montage sehr große Ausmaße besitzt, nämlich sehr hoch ist und auch aufgrund des Rotorblattdurchmesser eine große laterale Ausdehnung besitzt. Dieses führt insbesondere dann zu Problemen, wenn der Passage auf der Route zwischen dem Ort, an dem die Windenergieanlage montiert wird, und dem Offshore-Gebiet, in dem die Windenergieanlage errichtet werden soll, Hindernisse, beispielsweise Brücken, Schleusen etc., entgegen stehen, die einen Transport aufgrund der Abmessungen der in funktionsfähigem Zustand montierten Windenergieanlage in Höhe und Breite unmöglich machen. Ferner werden dafür besonders große und damit teure Transportschiffe benötigt.

WO-A-03/093584 zeigt ein Verfahren zum Reparatur einen Windkraftanlage.

Die meisten Windenergieanlagen sind heute so aufgebaut, dass einzelne Komponenten der Anlage ausgetauscht werden können. Für kleine und leichte Teile ist dieses eine gute Lösung. Sollte allerdings große und schwere Komponenten betroffen sein, z. B. Getriebe oder Generator, ist ein Austausch oder eine Reparatur vor Ort extrem schwierig auszuführen. Es muss ein Schwimmkran oder ein Jackup-Schiff mit den Einzelteilen und einer Mannschaft zur Anlage gebracht werden. Die Komponenten müssen mit nicht optimalen Werkzeugen unter schwierigen Bedingungen ausgebaut und auf das Transportschiff abgelassen werden. Die neuen Komponenten sind in die Gondel zu hieven und wieder einzubauen. Diese Komponenten wiegen durchaus 30 bis 60 t und der Einbau erfordert hohe Präzision. Bei einem solchen Reparaturvorgang fallen hohe Kosten für das Transportschiff und die Mannschaft an, wobei gleichzeitig Energieverluste durch Anlagenstillstand entstehen. Pro Reparaturtag ist dann mit Kosten in Höhe von ca. 40 bis 60.000 EUR zu rechnen. Größere Reparaturen können dabei durchaus mehrere Tage oder sogar eine Woche andauern. Dabei besteht ferner die Gefahr von Wetteränderungen, die zum Abbruch der Reparaturtätigkeiten führen können und damit die Kosten noch weiter steigen lassen.

Dieser Vorgang kann nur sehr schnell und damit kostengünstig durchgeführt werden, wenn der Rotor bereits an der Gondel montiert ist und in einem Hubvorgang auf den Turm der Anlage gehoben werden kann. Ein heute üblicher Dreiblattrotor ist aus geometrischen Gründen für so ein Verfahren nicht geeignet. Die Anlage muss dabei in zwei Hubvorgängen für die Gondel und den Rotor installiert werden. Besonders schwierig gestaltet sich die Installation dadurch, dass der Dreiblattrotor liegend auf dem Transportschiff gelagert werden muss und dann im Hubvorgang um ca. 90° gedreht werden muss. Dieses ist ein schwieriger Vorgang, der bei höheren Windgeschwindigkeiten auch für die Mannschaft gefährlich werden und zu Beschädigung an den Blättern führen kann. Ebenso ist die Verbindung des Rotors mit der Gondel ein kritischer Vorgang, vor allem für Offshore-Windenergieanlagen. Die Nabenbolzen müssen dabei in den Wellenflansch eingeführt und verschraubt werden. Dieses kann leicht zu Beschädigung an den Bolzen oder Auflageflächen führen, da der Rotor bei Offshoremontagen mit höheren Windgeschwindigkeiten nicht zielgenau geführt werden kann.

Der Aufwand, die Kosten und die Risiken sind bei der Offshore-Montage eines Dreiblattrotors sind als sehr hoch einzuschätzen.

Aufgabe der Erfindung ist es daher, ein Verfahren zum Transport und Errichten einer Windenergieanlage auf einer Gründung in einem Offshore-Gebiet bereitzustellen, die bei Reparaturen eine schnelle Wiederinbetriebnahme der Anlage zu erreichen, um längere Ausfallzeiten und Energieverluste zu vermeiden.

Die Aufgabe wird erfindungsgemäß gelöst durch die Merkmale des Anspruchs 1 bzw. 2. Die Unteransprüche geben vorteilhafte Ausgestaltungen der Erfindung wieder.

Die Erfindung schlägt also vor bei größeren Schäden und damit verbundenen längeren Ausfallzeiten vorteilhaft, das Maschinenhaus samt Rotor auszutauschen. Dafür wird mit dem Wasserfahrzeug eine funktionsfähige Einheit zum Offshore-Gebiet transportiert, die defekte Einheit abmontiert, auf dem Wasserfahrzeug abgesetzt und danach die funktionsfähige Einheit auf dem Turm aufgesetzt und an diesem befestigt.

Das erfindungsgemäße Vorgehen hat den Vorteil, dass bei Verwendung von Einblatt- und Zweiblattrotoren, die funktionsfähige Einheit auf dem Wasserfahrzeug aufgrund der schmalen Bauweise den Ort der Offshore-Windenergieanlage ungehindert erreichbar ist. So können z.B. Brücken und Schleusen problemlos passiert werden. Des weiteren vermindern sich die Ausfallzeiten und die damit verbundenen Kosten defekter Offshore-Windenergieanlagen beträchtlich, da die Offshore-Windenergieanlage nach Austausch der defekten Einheit sofort wieder einsatzfähig ist. Ebenso werden die Einsatzzeiten für das Wasserfahrzeug erheblich vermindert. Die Reparatur der defekten Gondeln kann dann im Hafen in der Montagehalle unter guten Arbeitsbedingungen mit allen geeigneten Hilfsmitteln und Werkzeugen durchgeführt werden. Die Gondel und die Blätter werden dabei komplett überarbeitet und inspiziert, so dass eine nahezu neuwertige Anlage für den nächsten Tausch zur Verfügung steht. Der Ausfall von Großkomponenten kann durchaus zweimal in der 20 jährigen Lebensdauer einer Offshore-Windenergieanlage erfolgen.

Bei einem Windpark mit 100 Anlagen bedeutet dieses, dass ca. einmal im Monat eine Anlage getauscht werden muss. Die Kosteneinsparungen bei der Anwendung des beschriebenen Verfahrens sind somit beträchtlich und erreichen mehrere Millionen Euro pro Jahr.

Soll also eine defekte Offshore-Windenergieanlage repariert werden, wird bei größeren Schäden und damit verbundenen längeren Ausfallzeiten das Maschinenhaus samt Rotor ausgetauscht. Dafür wird mit dem Wasserfahrzeug eine funktionsfähige Einheit zum Offshore-Gebiet transportiert, die defekte Einheit abmontiert, auf dem Wasserfahrzeug abgesetzt und danach die funktionsfähige Einheit auf den Turm aufgesetzt und an diesem befestigt.

Zur Durchführung des erfindungsgemäßen Verfahrens ist ein Wasserfahrzeug vorgesehen, das in Gestalt eines besonders bevorzugten Ausführungsbeispiels in der beigefügten Zeichnung dargestellt ist. Es zeigen:
- Fig. 1: eine schematische Draufsicht auf ein besonders bevorzugtes Ausführungsbeispiel eines Wasserfahrzeugs zur Durchführung des erfindungsgemäßen Verfahrens,
- Fig. 2: eine schematische Seitenansicht des Wasserfahrzeugs aus Fig. 1 bei der Annäherung an eine Offshore-Windenergieanlage mit einer auszutauschenden Einheit,
- Fig. 3: eine schematische Seitenansicht des Wasserfahrzeugs in einer zweiten Phase der Annäherung mit sich absenkenden Tragsäulen,

- Fig. 4: eine schematische Seitenansicht des Wasserfahrzeugs bei der Aufnahme der auszutauschenden Einheit,
- Fig. 5: eine schematische Seitenansicht des Wasserfahrzeugs beim Absetzen der auszutauschenden Einheit auf dem Wasserfahrzeug,
- Fig. 6: eine schematische Seitenansicht des Wasserfahrzeugs bei der Aufnahme der funktionsfähigen Einheit vom Wasserfahrzeug,
- Fig. 7: eine schematische Seitenansicht des Wasserfahrzeugs beim Anheben und Überführen der funktionsfähigen Einheit vom Wasserfahrzeug auf den Turm der Windenergieanlage und
- Fig. 8: eine schematische Seitenansicht des Wasserfahrzeugs nach Absetzen der funktionsfähigen Einheit auf dem Turm der Windenergieanlage.

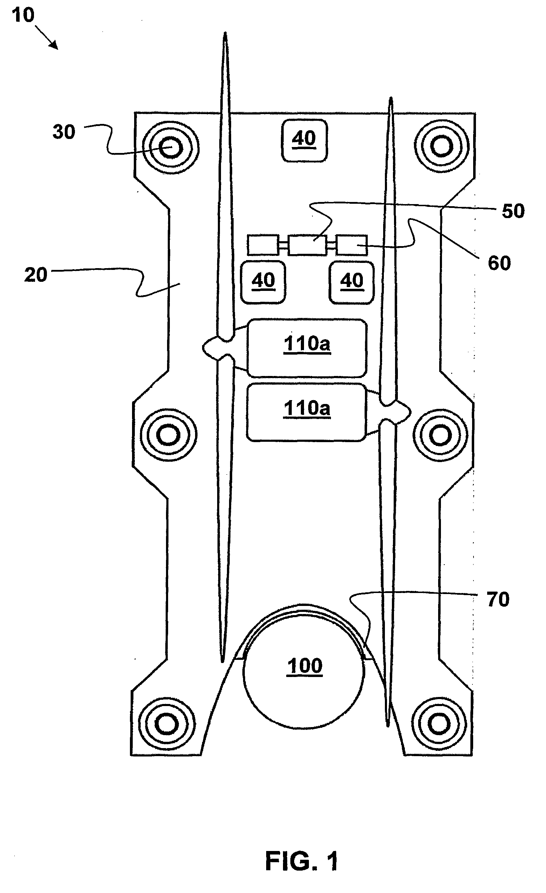

Fig. 1 zeigt eine schematische Ansicht des Wasserfahrzeugs in einer Draufsicht. Dabei sind zur besseren Übersichtlichkeit lediglich diejenigen Elemente dargestellt, die sich unmittelbar auf Höhe des Decks befinden. Insbesondere sind also die Kranaufbauten in dieser Ansicht nicht eingezeichnet.

Das Wasserfahrzeug 10 weist einen Schiffskörper 20 mit bevorzugt sechs absenkbaren Tragsäulen 30 auf, die so angeordnet sind, dass sich bei abgesenkten Tragsäulen eine möglichst gleichmäßige Lastverteilung der auf dem Schiffskörper angeordneten Lasten ergibt. Selbstverständlich ist aber auch eine höhere oder eine niedrigere Anzahl von Tragsäulen 30 denkbar, wobei das Minimum an Tragsäulen auf drei Tragsäulen 30 begrenzt ist.

An seiner einen Stirnseite weist der Schiffskörper 20 eine in Längsrichtung mittig angeordnete, im wesentlichen U-förmige Andockzone 70 auf, die beispielsweise auch annähernd V-förmig ausgebildet sein kann, die dem Durchmesser des Turmes einer Offshore-Windenergieanlage 100 auf Höhe des Meeresspiegels angepasst ist. Dabei ist die Andockzone also derart eingerichtet, dass der Querschnittsmittelpunkt der Offshore-Windenergieanlage 100 im an das Wasserfahrzeug 10 angedockten Zustand im wesentlichen auf der gedachten Verlängerung der Längsachse des Wasserfahrzeugs 10 liegt. Die Andockzone 70 kann zusätzlich zur Vermeidung von Schäden am Wasserfahrzeug 10 oder dem Turm 100 geeignete Mittel nach Art einer Pufferzone aufweisen.

Der Andockzone 70 gegenüberliegend angeordnet befindet sich ein entlang der Längsachse des Wasserfahrzeugs 10 verschwenkbarer Kran 40, der in Fig. 1 nur mit seinen schiffskörpernahen Elementen 40 eingezeichnet ist. Der Kran 40 verfügt über zwei auf zwei einzelnen Trommeln 60 aufgewickelte Seilsysteme, die über einen gemeinsamen Antrieb 50 angetriebenen werden. Beide Seilsysteme werden zum verdrehungsfreien Anheben und Absenken von Lasten benötigt, das dadurch gewährleistet ist, dass die Seilsysteme an zwei entlang einer Achse, bevorzugt der Längsachse einer Einheit, voneinander beabstandeten Punkten an der Last befestigt werden,

Im Fall der Errichtung einer neuen Offshore-Windenergieanlage 100 besteht die Last aus einer im wesentlichen funktionsfähigen Einheit 110a, 110b mit einem Maschinenhaus und einem Rotor, der aus einem oder zwei Rotorblättern besteht, die mit ihrem Schwerpunkt jedenfalls etwa auf der Längsachse des Wasserfahrzeugs 10 angeordnet ist. Dabei können mehrere funktionsfähige Einheiten auf dem Wasserfahrzeug 10 auch in mehreren Etagen übereinander angeordnet sein, damit mehrere Offshore-Windenergieanlagen mit einer funktionsbereiten Einheit versehen werden können.

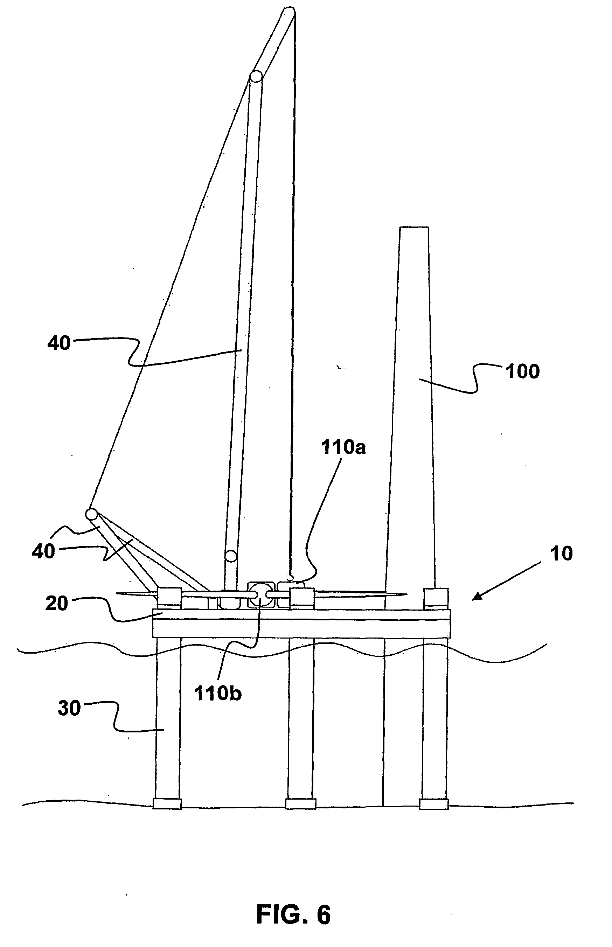

Wird das Wasserfahrzeug 10 hingegen zur Reparatur von Offshore-Windenergieanlagen 100 genutzt, wird nur ein Teil der Ladekapazität des Wasserfahrzeugs 10 ausgenutzt, da zunächst die defekte Einheit 110b von der defekten Offshore-Windenergieanlage 100 abgenommen und an einer freien Stelle auf dem Schiffskörper 20 des Wasserfahrzeugs 10 abgesetzt werden muss. Diese Stelle wird derart freigehalten, dass die defekte Einheit 110b mit ihrem Schwerpunkt im Wesentlichen auf der Längsachse des Wasserfahrzeugs 10 zu liegen kommt. Beispielsweise kann dieses die in Fig. 6 gezeigte Einheit 110b sein. Daraufhin wird die funktionsfähige Einheit 110a montiert, also vom Kran 40 angehoben und auf dem Turn der Offshore-Windenergieanlage 100 abgesetzt und an diesem befestigt.

Die Übereinstimmung der Schwerpunkte der Einheiten 110a, 110b und der Turmhochachse der Offshore-Windenergieanlage mit der Längsachse des Wasserfahrzeugs 10 ist nicht nur zur Sicherstellung der Stabilität des Wasserfahrzeugs, sondern auch notwendig, um die Schwenkachse des Krans 40 nur auf diese Richtung beschränken zu können.

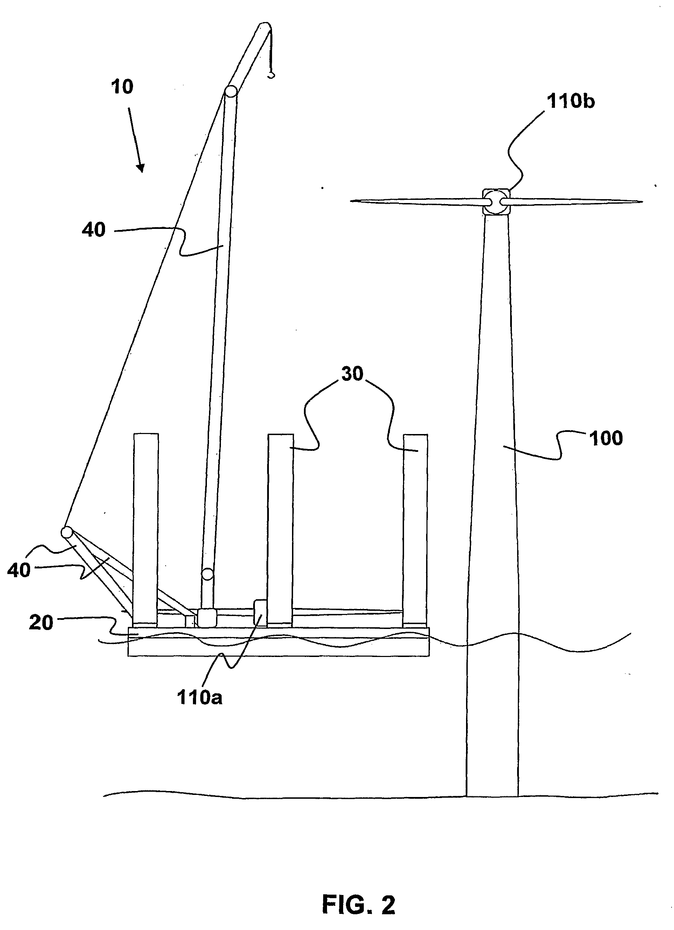

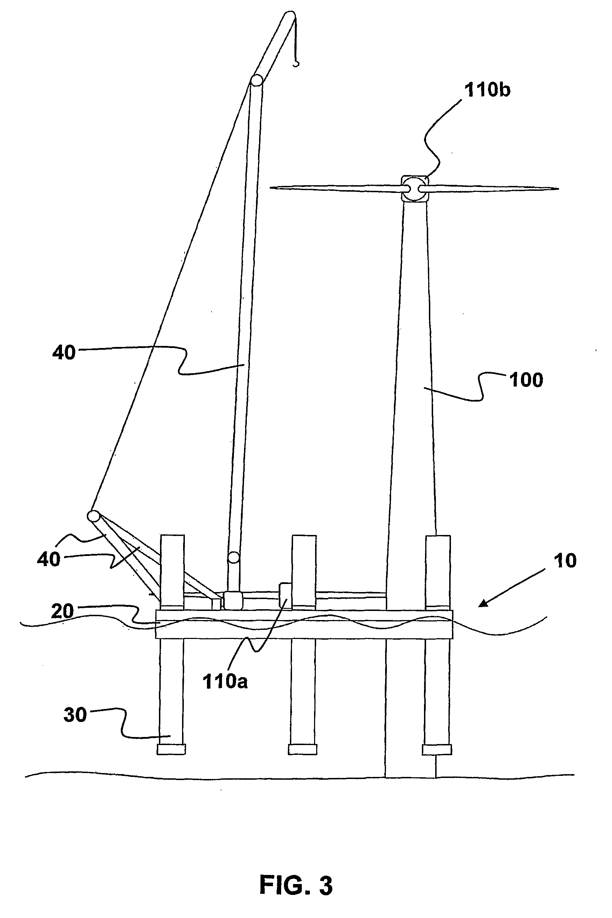

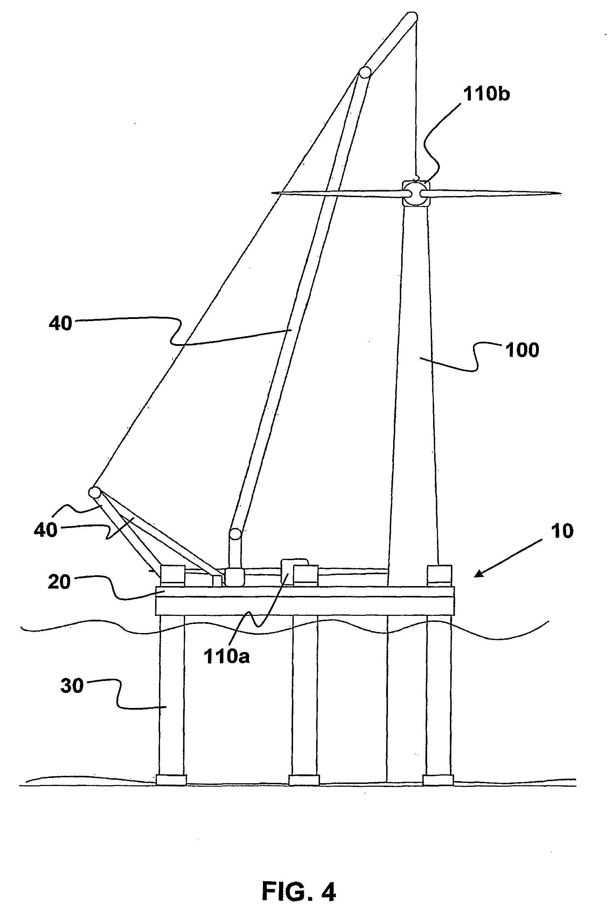

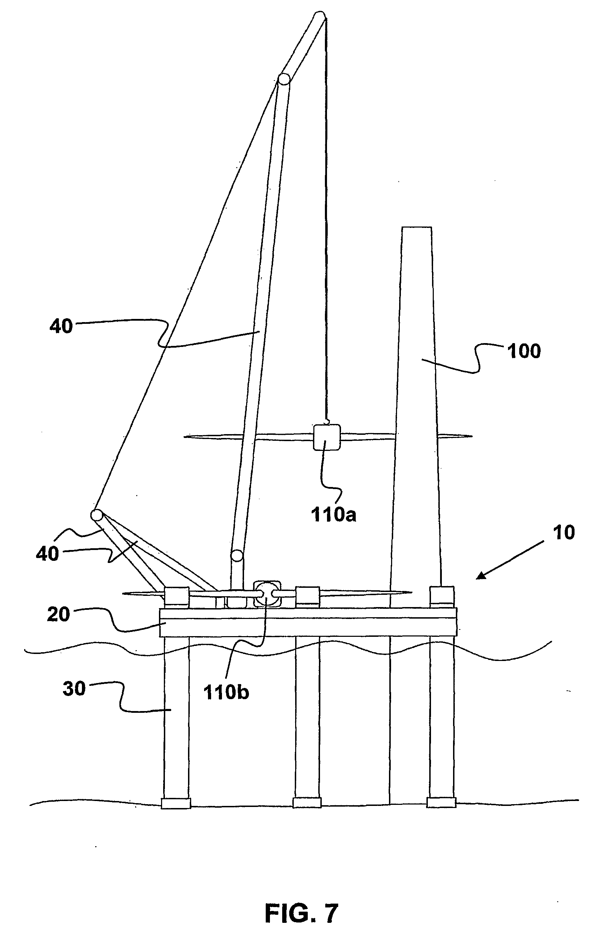

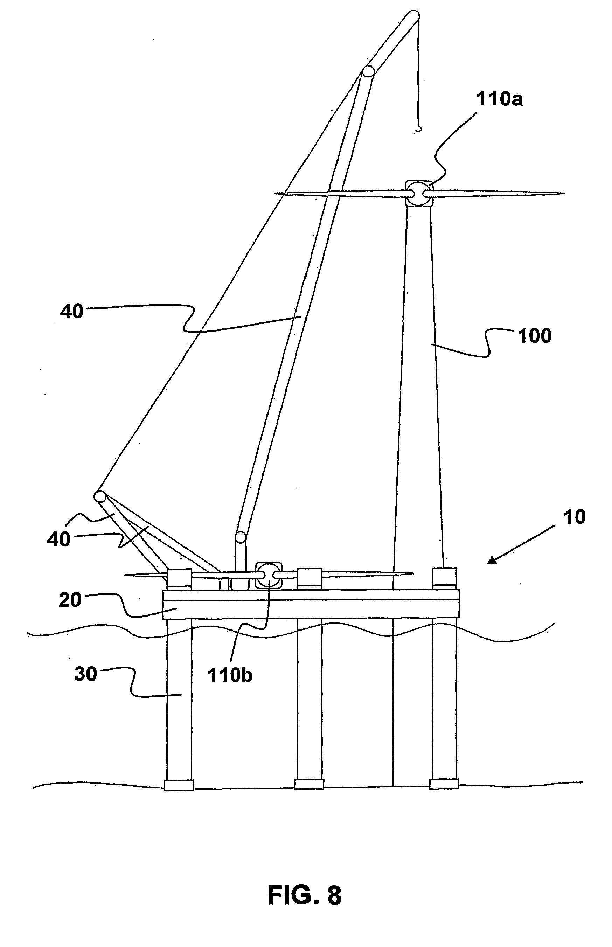

Die Notwendigkeit dieser Voraussetzungen wird in der schematischen Seitenansicht der Fig. 2 bis 8 deutlich. Das erfindungsgemäße Wasserfahrzeug 10 nähert sich zunächst schwimmend dem Ort einer Offshore-Windenergieanlage 100, deren Einheit 110b ausgetauscht werden soll (Fig. 2). Die absenkbaren Tragsäulen 30 werden ausgefahren und das Wasserfahrzeug 10 auf dem Meeresboden fixiert, wobei der Schiffskörper 20 oberhalb der Wasserlinie zu ruhen kommt (Fig. 3, 4).

Das Wasserfahrzeug 10 verfügt bevorzugt über einen eigenen Antrieb zur Fortbewegung oder für Kurskorrekturen beim Annähern an die Offshore-Windenergieanlage 100. Solch ein Antrieb ist aber nicht zwingend notwendig - ebenso kann es sich bei dem Wasserfahrzeug um eine Barge handeln, die von einem oder mehreren Schleppern in die angegebene Position manövriert wird.

Der Kran 40 verfügt über mehrere gelenkartig miteinander verbundene Elemente, die zum einen für die notwendige Tragkraft des Krans, zum anderen aber auch dafür sorgen, dass der Kran 40 auf ein vertikales Mindestmaß herunterklappbar ist. So kann der Kran 40 bevorzugt bei der Passage vom Hafen zum Ort der Offshore-Windenergieanlage in eine horizontale Position geklappt werden, in der er oberhalb der Einheit 110a ruht, damit beispielsweise Brücken ungehindert passiert werden können. Dabei befindet sich das unterste Gelenk des Krans 40 oberhalb der Höhe einer auf dem Schiffskörper 20 angeordneten funktionsfähigen Einheit 110a, sodass die oberhalb dieses Gelenks angeordneten Elemente des Krans 40 die horizontale Position oberhalb der Einheiten 110a, 110b einnehmen können. Vorteilhaft werden besondere Stützelemente vorgesehen sein, die ein Ablegen des Krans in eine horizontale Position erlauben, ohne dass die Einheit 110a geschädigt werden.

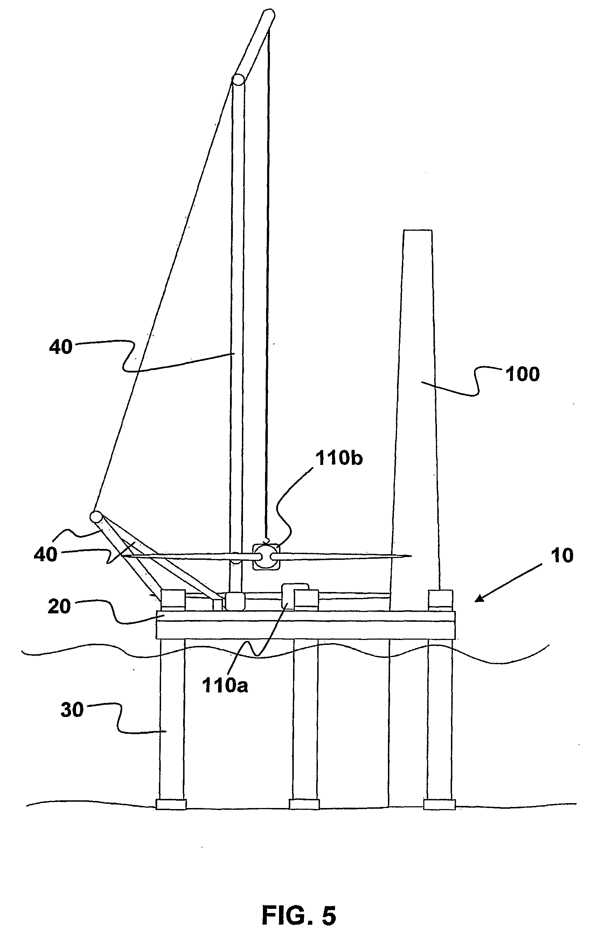

Zum Abnehmen einer auszutauschenden Einheit 110b und zum Absetzen einer funktionsfähigen Einheit 110b auf der Offshore-Windenergieanlage 100 führt der Kran 40 nun ausschließlich eine Schwenkbewegung zwischen einer im Beispiel linken, oberhalb einer auf dem Schiffskörper 20 angeordneten Einheit 110a und einer rechten, über dem Turmquerschnitt angeordneten Position aus (Fig. 5 - 8).

Dabei wird zunächst die auszutauschende Einheit 110b, nachdem der Rotor horizontal gebremst und fixiert wurde, vom Turm 100 der Offshore-Windenergieanlage gelöst, abgenommen und auf dem Wasserfahrzeug 10 abgelegt (Fig. 4 und 5). Daraufhin wird die funktionsfähige Einheit 110a, deren Rotor ebenfalls horizontal gebremst ist, vom Wasserfahrzeug 20 gehoben und auf dem Turm 100 der Offshore-Windenergieanlage abgesezt und befestigt, sodass unmittelbar nach dem Austausch der Einheiten 110a, 110b die Anlage wieder in Betrieb genommen werden kann, sodass längere Ausfallzeiten als bisher vermieden werden können.

Mit dem erfindungsgemäßen Verfahren und dem erfindungsgemäßen Wasserfahrzeug 10 zur Durchführung des Verfahrens ist es somit möglich, innerhalb kurzer Zeit mehrere Windenergieanlagen 100 in einem Offshore-Gebiet zu errichten oder zu reparieren. Die aus dem Maschinenhaus und dem Rotor bestehende Einheit 110a wird bevorzugt an Land oder einem vergleichbaren Standort, beispielsweise einer Plattform (auch in einem Offshore-Gebiet) montiert und zu dem Standort verbracht, an dem die Einheit 110a auf einen neu errichteten Turm 100 einer Offshore-Windenergieanlage 100 gesetzt oder eine defekte Einheit 110b ausgetauscht werden soll.

Dabei ist die Ausrichtung des Blattes des Einblattrotors oder der Blätter des Zweiblattrotors derart gewählt, dass die vorbestimmte Route zwischen dem Ort der Montage und dem Ort, an dem die Anlage im Offshore-Gebiet errichtet werden soll, ungehindert passiert werden kann. Das bedeutet, dass zur Passage von Wasserstraßen (etwa Kanälen), Schleusen oder Durchfahrten unter Brücken, die Stellung des Rotorblatts oder der Rotorblätter und der Kranelemente jeweils so eingestellt ist, dass die Ausdehnung des Rotorblatts bzw. der Rotorblätter geringer ist als die kleinste zur Passage benötigte lichte Weite der Wasserstraße oder Schleuse oder benötigte lichte Höhe der Brücke. Bevorzugt werden die Rotorblätter eines Einblatt- oder eines Zweiblattrotors daher in Längsrichtung des Wasserfahrzeugs 10 ausgerichtet sein.

Zur besseren Beladung des Wasserfahrzeugs mit einer oder mehreren funktionsfähigen Einheiten 110a, 110b weist das Wasserfahrzeug bevorzugt in seiner Längsrichtung verlaufenden Schienen zum Auf- oder Abfahren der auf einer Lafette ruhenden Einheiten 110a, 110b auf. Landseitig oder auf einer Plattform im Offshore-Gebiet ist also eine Andockzone für das Wasserfahrzeug 20 vorgesehen, die komplementär zur U-förmigen Andockzone 70 des Wasserfahrzeugs 20 ausgebildet ist und ebenfalls ein Schienensystem aufweist, das bei angedocktem Wasserfahrzeug 20 mit den Schienen des Wasserfahrzeugs 20 in Verbindung steht. Vorzugsweise werden die Tragsäulen des Wasserfahrzeugs 20 beim Be- und Entladen des Wasserfahrzeugs 20 ausgefahren sein und das Wasserfahrzeug 20 in der Höhe gegenüber der Höhe der landseitigen Andockzone oder der Andockzone der Plattform fixieren.

## Patentansprüche

1. Verfahren zum Reparieren einer defekten aus einer Nabe, einem oder zwei Rotorblättern bestehenden Rotor und einem ein Getriebe und einen Generator aufnehmenden Maschinenhaus gebildeten Einheit einer Offshore-Windenergieanlage, **gekennzeichnet durch** die Schritte
- Vormontieren einer aus einer Nabe, einem oder zwei Rotorblättern bestehenden Rotor und einem ein Getriebe und einen Generator aufnehmenden Maschinenhaus gebildeten funktionsfähigen Einheit (110a) an Land oder auf einer Plattform,
- Aufbringen der funktionsfähigen Einheit (110a) auf ein Wasserfahrzeug (10) derart, dass der Schwerpunkt der Einheit (110a) im Bereich der Längsachse des Wasserfahrzeugs (10) liegt und sich die Rotorflügel in Längsrichtung des Wasserfahrzeugs (10) erstrecken,
- Transportieren der funktionsfähigen Einheit (110a) zum Standort der defekten Offshore-Windenergieanlage (100),
- Lösen der defekten Einheit (110b) vom Turm (100) der Offshore-Windenergieanlage,
- Abnehmen der defekten Einheit (110b) vom Turm (100) unter Verwendung eines von dem Wasserfahrzeug (10) mitgeführten Krans (40),
- Ablegen der defekten Einheit (110b) auf dem Wasserfahrzeug (10),
- Anheben der funktionsfähigen Einheit (110a) von dem Wasserfahrzeug (10) unter Verwendung des von dem Wasserfahrzeug mitgeführten Krans (40),
- Absetzen der funktionsfähigen Einheit (110a) auf dem Turm (100) der Offshore-Windenergieanlage, und
- Befestigen der funktionsfähigen Einheit (110a) auf dem Turm (100) der Offshore-Windenergieanlage.

2. Wasserfahrzeug (10) zur Durchführung des Verfahrens nach Anspruch 1, mit einem absenkbare Tragsäulen (30) aufweisenden Schiffskörper (20), der eine in Längsrichtung mittige, U-förmige Andockzone (70) aufweist, die dem Durchmesser des Turmes (100) einer Offshore-Windenergieanlage (100) auf Höhe des Meeresspiegels angepasst ist,
**gekennzeichnet durch**
einen der Andockzone gegenüberliegend angeordneten, entlang der Längsachse des Wasserfahrzeugs (10) verschwenkbaren Kran (40) zum Anheben einer mit ihrem Schwerpunkt im Wesentlichen auf der Längsachse des Schiffskörpers angeordneten Windenergieanlagen-Gondel (110a, 110b) und Absetzen der Gondel (110a, 110b) auf dem von der Andockzone (70) aufgenommenen Turm der Windenergieanlage (100),
wobei der Kran zwei über einen gemeinsamen Antrieb angetriebene, auf zwei einzelnen Trommeln (60) aufgewickelte Seilsysteme zum verdrehungsfreien Anheben und Absenken von Lasten aufweist.

3. Wasserfahrzeug (10) nach Anspruch 2, **dadurch gekennzeichnet, dass** das Wasserfahrzeug mit zwei Aufnahmen für die Einheiten (110a, 110b) versehen ist.

4. Wasserfahrzeug (10) nach einem der Ansprüche 2 und 3, **dadurch gekennzeichnet, dass** der Kran (40) in eine horizontale Position, in der er oberhalb der Einheit (110a, 110b) ruht, klappbar ist.

5. Wasserfahrzeug (10) nach einem der vorhergehenden Ansprüche, **gekennzeichnet durch** in seiner Längsrichtung verlaufende Schienen zum Auffahren oder Abfahren der auf einer Lafette ruhenden Einheiten (110a, 110b).

## Claims

1. A method for repairing a defective unit of an offshore wind turbine, which unit comprises a rotor consisting of a hub and one or two rotor blades, and a nacelle receiving a gearbox and a generator,
**characterized by** the following steps
- pre-assembling a functional unit (110a), which unit comprises a rotor consisting of a hub and one or two rotor blades, and a nacelle receiving a gearbox and a generator, ashore or on a platform,
- placing the functional unit (110a) on a watercraft (10) in such a manner that the centre of gravity of the unit (110a) lies in the region of the longitudinal axis of the watercraft (10) and the rotor blades extend in the longitudinal direction of the watercraft (10),
- transporting the functional unit (110a) to the site of the defective offshore wind turbine (100),
- detaching defective the unit (110b) from the tower (100) of the offshore wind turbine,
- detaching the defective unit (110b) from the tower (100) using a crane (40) aboard the watercraft (10),
- placing the defective unit (110b) on the watercraft (10),
- lifting the functional unit (110a) from the watercraft (10) using the crane (40) aboard the watercraft,
- placing the functional unit (110a) on the tower (100) of the offshore wind turbine, and
- fastening the functional unit (110a) on top of the tower (100) of the offshore wind turbine.

2. A watercraft (10) for carrying out the method according to Claim 1, having a hull (20) that exhibits support columns (30) that can be lowered and that exhibits a U-shaped docking zone (70), centrally in the longitudinal direction, that is matched to the diameter of the tower (100) of an offshore wind turbine (100) at sea level,
**characterized by**
a crane (40) disposed opposite the docking zone and pivotable along the longitudinal axis of the watercraft (10) for lifting a wind turbine nacelle (110a, 110b) that is disposed with its centre of gravity substantially on the longitudinal axis of the hull, and for placing the nacelle (110a, 110b) on the tower, received by the docking zone (70), of the wind turbine (100),
the crane exhibiting two cable systems, driven by means of a joint drive system, wound onto two individual drums (60), for torsion-free lifting and lowering loads.

3. The watercraft (10) according to Claim 2, **characterized in that** the watercraft is provided with two receptacles for the units (110a, 110b).

4. The watercraft (10) according to one of Claims 2 and 3, **characterized in that** the crane (40) can be folded into a horizontal position in which it rests above the unit (110a, 110b).

5. The watercraft (10) according to one of the preceding claims, **characterized by** rails extending in its longitudinal direction for lifting or lowering the units (110a, 110b) resting on a carriage.

## Revendications

1. Procédé de réparation d'une unité d'une éolienne offshore défectueuse composée d'un moyeu, d'un rotor comprenant une ou deux pales, et d'une salle des machines accueillant un système d'entraînement et un générateur,
**caractérisé par** les étapes suivantes :
- Montage préalable, sur terre ou sur une plateforme, d'une unité (110a) fonctionnelle composée d'un moyeu, d'un rotor comprenant une ou deux pales, et d'une salle des machines accueillant un système d'entraînement et un générateur,
- Installation d'une unité fonctionnelle (110a) sur une embarcation (10) de telle sorte que le centre de l'unité (110a) se trouve au niveau de l'axe longitudinal de l'embarcation (10) et que les pales des rotors s'étendent dans le sens de la longueur de l'embarcation (10),
- transport de l'unité fonctionnelle (110a) sur le site de l'éolienne offshore défectueuse (100),
- retrait de l'unité défectueuse (110b) de la tour (100) de l'éolienne offshore,
- retrait de l'unité défectueuse (110b) de la tour (100) à l'aide d'une grue (40) transportée par l'embarcation (10),
- dépôt de l'unité défectueuse (110b) de la tour (100) sur l'embarcation (10),
- élévation de l'unité fonctionnelle (110a) depuis l'embarcation (10) à l'aide d'une grue transportée par l'embarcation (10),
- Installation de l'unité fonctionnelle (110a) sur la tour (100) de l'éolienne offshore, et
- fixation de l'unité fonctionnelle (110a) sur la tour (100) de l'éolienne offshore.

2. Embarcation (10) permettant l'exécution du procédé selon la revendication 1 avec un vaisseau (20) présentant des colonnes de support abaissables (30) et une zone d'accostage en forme de U (70) située au milieu dans le sens de la longueur, et adaptée au diamètre de la tour (100) d'une éolienne offshore (100) au niveau de la mer,
**caractérisée par**
une grue pivotante (40) située face à la zone d'accostage, le long de l'axe longitudinal de l'embarcation (10), permettant d'élever une gondole pour éolienne (110a, 110b) dont le barycentre se situe principalement sur l'axe longitudinal du corps du vaisseau, et de poser la gondole (110a, 110b) sur la tour de l'éolienne (100) accueillie dans la zone d'accostage (70),
à savoir que la grue possède deux systèmes de câbles enroulés sur deux tambours individuels (60) entraînés par un système d'entraînement commun et permettant une élévation et un abaissement de charges sans torsion.

3. Embarcation (10) selon la revendication 2, caractérisé en ce quel'embarcation est équipée de deux points de réception pour les unités (110a, 110b).

4. Embarcation (10) selon une des revendications 2 et 3, **caractérisée en ce que** la grue (40) est rabattable en position horizontale, la faisant reposer au-dessus de l'unité (110a, 110b).

5. Embarcation (10) selon une des revendications susmentionnées, **caractérisé par** des rails dans le sens de sa longueur pour amener ou retirer une unité (110a, 110b) reposant sur un affût.
